# EUROPEAN PATENT APPLICATION

(11) **EP 1 775 988 A1**
(43) Date of publication of application: **18.04.2007**
(21) Application number: 05767429.3
(22) Date of filing: 29.07.2005
(51) Int. Cl.: H04R 1/02, H04M 1/02

(54) **SPEAKER SYSTEM, MOBILE TERMINAL DEVICE, AND ELECTRONIC DEVICE**

(30) Priority: 30.07.2004 JP 2004223702
(71) Applicant: MATSUSHITA ELECTRIC INDUSTRIAL CO., LTD., Osaka 571-8501 (JP)
(72) Inventor: SUGIYAMA, Shinya Matsushita Elc Ind Co, Ltd, 1-chome Osaka 540-6319 (JP); TOKUDA, Tatsuhiko Matsushita Elc Ind Co, Ltd, 1-chome Osaka 540-6319 (JP); INOUE, Yukinari Matsushita Elc Ind Co, Ltd, 1-chome Osaka 540-6319 (JP); AMIE, Masaki Matsushita Elc Ind Co, Ltd, 1-chome Osaka 540-6319 (JP)
(74) Representative: Grünecker, Kinkeldey, Stockmair & Schwanhäusser Anwaltssozietät
(86) International application number: PCT/JP2005/013962
(87) International publication number: WO 2006/011604

(57) **Abstract**

Provided is a speaker unit, which is enabled by a simple constitution to retain characteristics such as a satisfactory output sound pressure.

The speaker unit 100 has a frame including a first casing 11 and a second casing 14. A sound hole 12 is formed at the center of the upper face of the first casing 11, and a fixing portion 13 is formed on the inner face side. Between the fixing portion 13 and the second casing 14, there is interposed a vibration absorbing member 15. This vibration absorbing member 15 stabilizes the arrangement of a speaker 10, and absorbs the mechanical vibrations to be generated from the speaker 10 at the action time of the speaker 10, thereby to vibrate the speaker 10, the first casing 11 and the fixing portion 13 homogeneously. As a result, the sound to be emitted from the speaker 10 through the sound hole 12 and the sound to be emitted by the mechanical vibrations transmitted from the speaker 10, through the first casing 11 are efficiently emitted.

## Description

### <Technical Field>

The present invention relates to a speaker unit to be used in an electronic device such as a mobile terminal device, and to the mobile terminal device and the electronic deice.

### <Background Art>

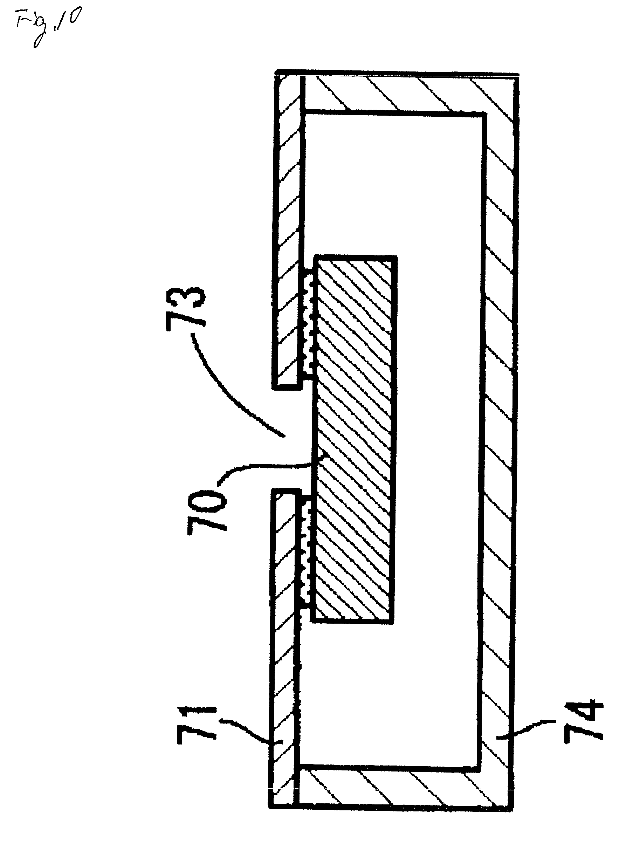

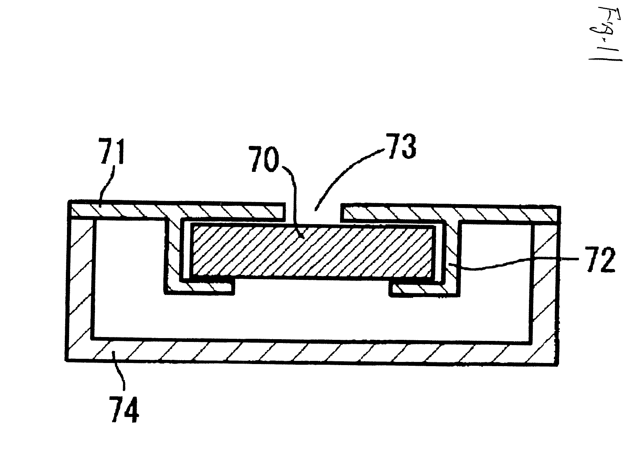

In the speaker unit to be used in the electronic device such as the mobile terminal device, generally speaking, the following constitution is made to reduce the parts number and to retain the feasibility of assembly and maintenance. Fig. 10 is a section showing a constitution of a speaker unit of an example of the prior art. This speaker unit has a frame including a first casing 71 and a second casing 74. A sound hole 73 is formed in the first casing 71, and a speaker 70 is mounted on the inner side of the sound hole 73. In this case, the constitution is made such that the speaker 70 is directly adhered to and fixed on the back side of the first casing 71, for example, by means of an adhesive such as a double-faced tape. Fig. 11 is a section showing a constitution of a speaker unit of another example of the prior art. On the back side of the first casing 71, there is disposed a holder 72 for holding the speaker 70. In this constitution, the speaker 70 is adhered to and fixed on the back side of the first casing 71 by means of the adhesive, or is held by the holder 72.

As the speaker unit of this kind, moreover, there is known (as referred to Patent Document 1) a mass-excited acoustic device, which is mounted on a mobile telephone. This mass-excited acoustic device is constituted to include a sound board, a base and a transducer. In the prior art, there is also known (as referred to Patent Document 2) an acoustic device for performing acoustic actions with flexural waves.

In recent years, the small-sized electronic device such as the mobile terminal device represented by the mobile telephone is abruptly developing in its thickness reduction. It has been desired to thin not only the casing and the peripheral parts but also the speaker unit. The speaker is mostly thinned without degrading the output sound pressure by enlarging the mass of the vibrator thereby to enhance the sharpness of the resonance. On the other hand, the casing is also thinned to the limit.

At the action time of the speaker, however, serious mechanical vibrations are generated from the vibrator so that the joint portion between the speaker and the casing finely moves to make the action of the speaker unstable. As a result, both the sound to be emitted from the speaker through the sound hole and the sound to be emitted by the mechanical vibrations transmitted from the speaker, through the casing are not those of the intrinsic actions. As a result, it is difficult to retain the characteristics such as the output sound voltage sufficiently.
Patent Document 1: JP-A-8-275293; and
Patent Document 2: JP-T-2001-513967

### <Disclosure of the Invention>

### <Problems that the Invention is to Solve>

The present invention has been conceived in view of the background thus far described, and has an object to provide a speaker unit, a mobile terminal device and an electronic device, which can retain the characteristics of a satisfactory output sound pressure with a simple constitution.

### <Means for Solving the Problems>

According to the invention, there is provided a speaker unit comprising: a first casing having a sound hole formed therein; a second casing jointed to said first casing for forming a frame together with said first casing; a speaker arranged in said frame and having a diaphragm for emitting a sound by vibrating said diaphragm in accordance with electric signals applied; a holding member disposed on the inner face side of said first casing for holding said speaker between itself and said first casing; and a vibration absorbing member interposed between said holding member and said second casing confronting said holding member, for supporting said holding member and for absorbing the mechanical vibrations generated at the action time of said speaker.

Thus, the speaker is clamped and fixed between the first casing and the holding member, and the arrangement of the speaker is stabilized by the vibration absorbing member interposed between the holding member and the second casing. By the vibration absorbing member, moreover, the mechanical vibrations to be generated at the action time of the speaker are absorbed, so that the mechanical vibrations to be generated by the speaker are not transmitted to the second casing. Thus, the vibrations are so adjusted that the speaker, the first casing and the holding member may be homogeneously vibrated. As a result, the sound to be emitted from the speaker through the sound hole and the sound to be emitted by the mechanical vibrations transmitted from the speaker, through the first casing can be efficiently emitted. As a result, even in the case of mounting the thin type speaker the resonance of which is highly sharpened by thinning the casing to increase the mass of the vibrator accordingly, the speaker can be stably held to keep the characteristics of a satisfactory output sound pressure level with the simple constitution.

In a speaker unit of one mode of the invention, moreover, an elastic member is interposed between said first casing and said speaker. In the speaker unit, alternatively, an elastic member is interposed between said speaker and said holding member.

By thus providing the elastic member, the characteristics such as the output sound pressure can be improved.

In a speaker unit of one mode of the invention, moreover, the speaker unit further comprises a peripheral part disposed on the inner face of said second casing and arranged to abut against said vibration absorbing member.

By thus providing the peripheral part or by increasing the mass of the peripheral part, the characteristics such as the output sound pressure can be improved.

In a speaker unit of one mode of the invention, moreover, said holding member is formed separately of said first casing and attached to said first casing for holding said speaker.

As a result, the assembly is facilitated by forming the holding member and the first casing separately of each other.

In a speaker unit of one mode of the invention, moreover, an acoustic tube is interposed between said first casing and said speaker for transmitting the sound emitted from said speaker to said first casing.

By thus disposing the acoustic tube, the sound can be efficiently emitted through the acoustic tube thereby to improve the characteristics such as the output sound pressure.

In a speaker unit of one mode of the invention, moreover, said frame includes a plurality of sets of signal output units having said sound hole, said speaker, said holding member and said vibration absorbing member.

Even with the constitution having the signal output unit having a plurality of sets of speakers, therefore, the speakers can be stably held to retain the characteristics of a satisfactory output sound pressure level with the simple constitution.

According to the invention, there is provided a mobile terminal device comprising: a speaker unit as set forth in any of claims 1 to 7; and a signal output unit for outputting electric signals to be fed to said speaker unit.

In one mode of the invention, moreover, the mobile terminal device further comprises: a receiving portion for receiving radio signals, wherein the electric signals to be fed to said speaker unit are voice signals based on the received signals by said receiving portion.

Thus, the arrangement of the speaker is stabilized by the vibration absorbing member, and the mechanical vibrations to be generated at the action time of the speaker are absorbed, so that the vibrations are so adjusted that the speaker, the first casing and the holding member may be homogeneously vibrated. As a result, the sound to be emitted from the speaker through the sound hole and the sound to be emitted by the mechanical vibrations transmitted from the speaker, through the first casing can be efficiently emitted. Even in the thinned mobile terminal device, for example, the speaker can be stably held to retain the characteristics of the satisfactory output sound pressure level with the simple constitution. In case the electric signals to be fed to the speaker unit indicate a receiving sound, the speaker unit functions as a receiver. In case the electric signals indicate the ring tone, the music, the voice or the effective sound, the speaker unit functions as a loudspeaker.

An electronic device of the invention comprises: any of said speaker units; and a signal output unit for outputting the electric signals to be fed to said speaker unit.

In one mode of the invention, moreover, said electronic device further comprises: a control unit for processing voice signals, wherein the electric signals to be fed to said speaker unit are voice signals generated by said control unit.

Thus, the arrangement of the speaker is stabilized by the vibration absorbing member, and the mechanical vibrations to be generated at the action time of the speaker are absorbed, so that the vibrations are so adjusted that the speaker, the first casing and the holding member may be homogeneously vibrated. As a result, the sound to be emitted from the speaker through the sound hole and the sound to be emitted by the mechanical vibrations transmitted from the speaker, through the first casing can be efficiently emitted. Even in the thinned electronic device, for example, the speaker can be stably held to retain the characteristics of the satisfactory output sound pressure level with the simple constitution. In case the electric signals to be fed to the speaker unit indicate the operation sound, the music, the voice or the effective sound, the speaker unit functions as a loudspeaker.

According to the invention, there is provided a speaker unit comprising: a first casing having a sound hole formed therein; a second casing jointed to said first casing for forming a frame together with said first casing; a speaker arranged in said frame and having a diaphragm for emitting a sound by vibrating said diaphragm in accordance with electric signals applied; a fixing portion projecting from the inner face side of said first casing for fixing said speaker; and a vibration absorbing member interposed between said fixing portion and said second casing confronting said fixing portion, for supporting said fixing portion and for absorbing the mechanical vibrations generated at the action time of said speaker.

Thus, the speaker is clamped and fixed between the first casing and the fixing portion, and the arrangement of the speaker is stabilized by the vibration absorbing member interposed between the fixing portion and the second casing. By the vibration absorbing member, moreover, the mechanical vibrations to be generated at the action time of the speaker are absorbed, so that the mechanical vibrations to be generated by the speaker are not transmitted to the second casing. Thus, the vibrations are so adjusted that the speaker, the first casing and the fixing portion may be homogeneously vibrated. As a result, the sound to be emitted from the speaker through the sound hole and the sound to be emitted by the mechanical vibrations transmitted from the speaker, through the first casing can be efficiently emitted. As a result, even in the case of mounting the thin type speaker the resonance of which is highly sharpened by thinning the casing to increase the mass of the vibrator accordingly, the speaker can be stably held to keep the characteristics of a satisfactory output sound pressure level with the simple constitution.

In the speaker unit of one mode of the invention, moreover, the frame of said speaker includes a fixing portion for fixing the frame to the inner face side of said first casing.

By providing the fixing portion, the characteristics such as the output sound pressure can be improved.

In a speaker unit of one mode of the invention, moreover, an elastic member is interposed between said first casing and said speaker.

By providing the elastic member, the characteristics such as the output sound pressure can be improved.

In one mode of the invention, moreover, said speaker unit further comprises: a peripheral part disposed on the inner face of said second casing and arranged to abut against said vibration absorbing member.

By thus providing the peripheral part, the characteristics such as the output sound pressure can be improved by enlarging the mass of the peripheral part.

In the speaker unit of one mode of the invention, moreover, an acoustic tube is interposed between said first casing and said speaker for transmitting the sound emitted from said speaker to said first casing.

By thus providing the acoustic tube, the sound can be efficiently emitted through the acoustic tube thereby to improve the characteristics such as the output sound pressure.

In the speaker unit of one mode of the invention, moreover, said frame includes a plurality of sets of signal output units having said sound hole, said speaker, said fixing portion and said vibration absorbing member.

Even with the constitution having the signal output unit having a plurality of sets of speakers, therefore, the speakers can be stably held to retain the characteristics of a satisfactory output sound pressure level with the simple constitution.

According to the invention, there is provided a mobile terminal device comprising: a speaker unit as set forth in any of claims 12 to 17; and a signal output unit for outputting electric signals to be fed to said speaker unit.

In one mode of the invention, the mobile terminal device further comprises: a receiving portion for receiving radio signals, wherein the electric signals to be fed to said speaker unit are voice signals based on the received signals by said receiving portion.

Thus, the arrangement of the speaker is stabilized by the vibration absorbing member, and the mechanical vibrations to be generated at the action time of the speaker are absorbed, so that the vibrations are so adjusted that the speaker, the first casing and the holding member may be homogeneously vibrated. As a result, the sound to be emitted from the speaker through the sound hole and the sound to be emitted by the mechanical vibrations transmitted from the speaker, through the first casing can be efficiently emitted. Even in the thinned mobile terminal device, for example, the speaker can be stably held to retain the characteristics of the satisfactory output sound pressure level with the simple constitution. In case the electric signals to be fed to the speaker unit indicate a receiving sound, the speaker unit functions as a receiver. In case the electric signals indicate the ring tone, the music, the voice or the effective sound, the speaker unit functions as a loudspeaker.

According to the invention, there is provided an electronic device comprising: any of said speaker units; and a signal output unit for outputting the electric signals to be fed to said speaker unit.

In one mode of the invention, moreover, the electronic device further comprises: a control unit for processing voice signals, wherein the electric signals to be fed to said speaker unit are voice signals generated by said control unit.

Thus, the arrangement of the speaker is stabilized by the vibration absorbing member, and the mechanical vibrations to be generated at the action time of the speaker are absorbed, so that the vibrations are so adjusted that the speaker, the first casing and the holding member may be homogeneously vibrated. As a result, the sound to be emitted from the speaker through the sound hole and the sound to be emitted by the mechanical vibrations transmitted from the speaker, through the first casing can be efficiently emitted. Even in the thinned electronic device, for example, the speaker can be stably held to retain the characteristics of the satisfactory output sound pressure level with the simple constitution. In case the electric signals to be fed to the speaker unit indicate the operation sound, the music, the voice or the effective sound, the speaker unit functions as a loudspeaker.

### <Effects of the Invention>

According to the invention, it is possible to provide a speaker unit, a mobile terminal device and an electronic device, which can retain the characteristics of a satisfactory output sound pressure with a simple constitution.

### <Brief Description of the Drawings>

Fig. 1 is a perspective view showing an exterior of a mobile terminal device having a speaker unit mounted thereon according to a first embodiment of the invention.
Fig. 2 is a diagram showing an electric configuration of a voice output unit in the mobile terminal device of the first embodiment.
Fig. 3a is a diagram showing a constitution of a first speaker unit according to the first embodiment of the invention.
Fig. 3b is a diagram showing a constitution of a second speaker unit according to the first embodiment of the invention.
Fig. 4 is a characteristic diagram showing the measured results of output sound pressure - frequency characteristics in the speaker unit of the embodiment.
Fig. 5a is a diagram showing a constitution of a first speaker unit according to a second embodiment of the invention.
Fig. 5b is a diagram showing a constitution of a second speaker unit according to the second embodiment of the invention.
Fig. 6a is a diagram showing a constitution of a first speaker unit according to a third embodiment of the invention.
Fig. 6b is a diagram showing a constitution of a second speaker unit according to the third embodiment of the invention.
Fig. 7a is a diagram showing a constitution of a first speaker unit according to a fourth embodiment of the invention.
Fig. 7b is a diagram showing a constitution of a second speaker unit according to the fourth embodiment of the invention.
Fig. 8 is a perspective view showing an exterior of a mobile terminal device having a speaker unit mounted thereon according to a fifth embodiment of the invention.
Fig. 9a is a diagram showing a first electric configuration of a voice output unit in the mobile terminal device of the fifth embodiment.
Fig. 9b is a diagram showing a second electric configuration of a voice output unit in the mobile terminal device of the fifth embodiment.
Fig. 10 is a section showing the constitution of the speaker unit of one example of the prior art.
Fig. 11 is a section showing the constitution of the speaker unit of another example of the prior art.

### <Description of Reference Numerals and Signs>

1, 600 Mobile Terminal Device
10, 40, 41 Speaker
11, 21, 31, 42 First Casing
12, 43, 44 Sound Hole
13, 23, 33, 45, 46 Fixing Portion
14, 24, 34, 47 Second Casing
15, 48, 49 Vibration Absorbing Member
16, 17 Elastic Member
18 Peripheral Part
100, 200, 300, 400 Speaker Unit
113, 123, 133, 145, 146 Holder

### <Best Mode for Carrying Out the Invention>

In this embodiment, there is disclosed a constitution example of a speaker unit to be mounted on a small-sized electronic device such as a mobile terminal device, as represented by a mobile telephone or a PDA (Personal Digital Assistant: Mobile Information Terminal).

### (First Embodiment)

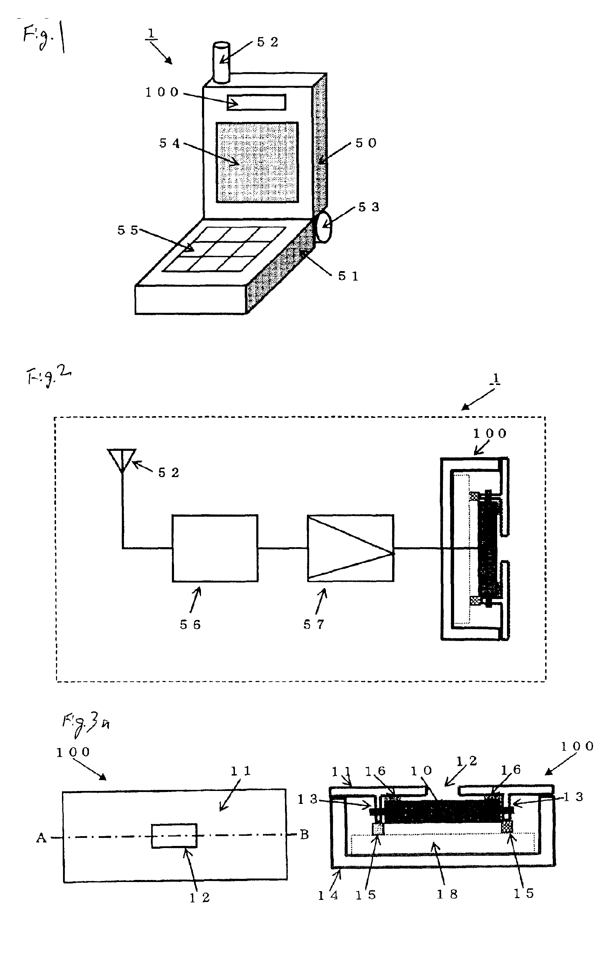

Fig. 1 is a perspective view showing an exterior of a mobile terminal device having a speaker unit mounted thereon according to a first embodiment of the invention. This mobile terminal device 1 is exemplified by a mobile telephone having a communicating function, and includes a first casing 50 and a second casing 51, which can be folded by a hinge 53. The first casing 50 has a display unit 54 and a speaker unit 100 arranged therein. Moreover, the first casing 50 is equipped with a receiving antenna 52 on its upper face. On the other hand, the second casing 51 has an operation unit 55 arranged thereon.

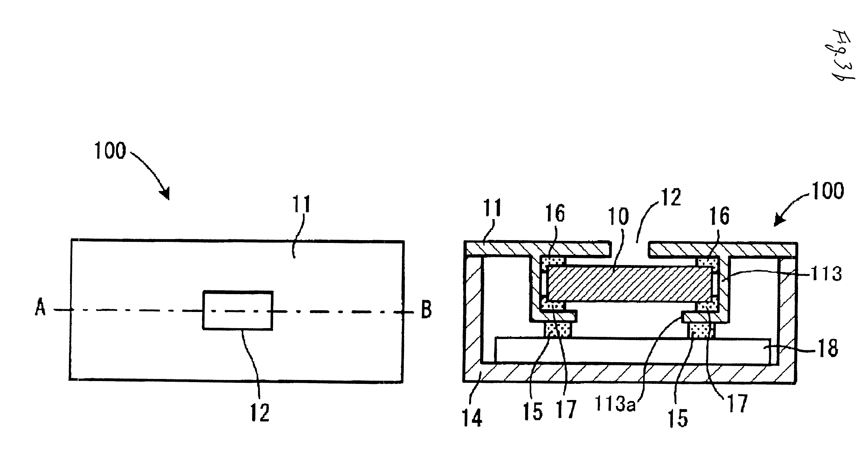

Fig. 2 is a diagram showing an electric configuration of a voice output unit in the mobile terminal device of the first embodiment. The voice output unit is constituted to include the receiving antenna 52, a receiving circuit 56, a signal output unit 57 and the speaker unit 100.

In the mobile terminal device 1 thus constituted, radio signals received at the receiving antenna 52 are converted into electric signals, and these converted electric signals are amplified by the signal output unit 57 and outputted as the electric signals of voice output signals to the speaker unit 100. When the voice output signals are inputted to the speaker unit 100, this speaker unit 100 reproduces and outputs the sound such as the receiving sound based on the received signals, by emitting that sound from the sound hole. In this case, the speaker unit 100 functions as the receiver of the mobile terminal device 1. In case the electric signals of not only a receiving sound but also a ringtone indicating an arrival, or a voice output signal indicating a music, a voice or a game effect sound are to be inputted to the speaker unit 100, the ring tone, the music, the voice or the effective sound is reproduced from the sound hole. In this case, the speaker unit 100 functions as a loudspeaker.

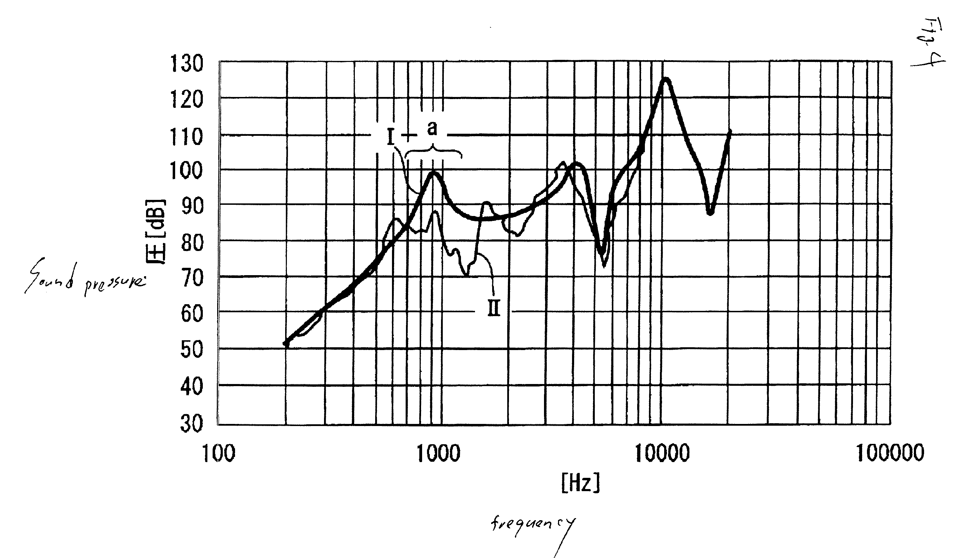

Here are described the constitution and actions of the speaker unit 100. Fig. 3a is a diagram showing the constitution of the first speaker unit 100 according to the first embodiment of the invention in Fig. 3, (A) is a top plan view showing the exterior of the speaker unit 100, and (B) is a section taken along line A - B of the speaker unit 100 of (A).

The speaker unit 100 has a frame including a first casing 11 and a second casing 14. The first casing 11 is jointed to the peripheral edge portion of the second casing 14 by means of an adhesive. At the center of the upper face of the first casing 11, there is formed and opened a rectangular sound hole 12. On the inner face side of the first casing 11, moreover, there is formed a fixing portion 13 for holding a speaker 10. This fixing portion 13 is extended vertically downward from the back side of the first casing 11, and is secured to the frame of the speaker 10 so that the speaker 10 is fixed. This speaker 10 is equipped with a diaphragm so that it emits the sound by vibrating the diaphragm in accordance with the electric signals applied.

On the other hand, the fixing portion 13 may be replaced by a holding member 113. An example using the holding member 113 is shown in Fig. 3b. Fig. 3b is a diagram showing the constitution of the second speaker unit 100 according to the first embodiment of the invention. This holding member 113 is extended vertically downward from the back side of the first casing 11, and is shaped to have a leading end 113a bent in a section of letter L. The speaker 10 is so fixed as is clamped between the holding member 113 and the first casing 11.

Including the second to fifth embodiments, as described hereinafter, the fixing portion may be replaced by the holding member.

On the other hand, the second casing 14 is equipped on its bottom face with a peripheral part 18, and a vibration absorbing member 15 is arranged between the peripheral part 18 and the fixing portion 13. This vibration absorbing member 15 performs functions to stabilize the arrangement of the speaker 10 clamped and fixed by the first casing 11 and the fixing portion 13, and to absorb the mechanical vibrations generated by the speaker 10, thereby to prevent the mechanical vibrations from being transmitted at the action time of the speaker 10, so that the speaker 10, the first casing 11 and the fixing portion 13 may vibrate homogeneously. Moreover, elastic members 16 and 17 are interposed between the first casing 11 and the speaker 10 and between the speaker 10 and the fixing portion 13, respectively. Here, the elastic members 16 and 17 may be eliminated to clamp the speaker 10 directly between the first casing 11 and the fixing portion 13. In Fig. 3b, the peripheral part 18 is not disposed on the bottom face of the second casing 14, but the vibration absorbing member 15 may be directly interposed between the holding member 113 and the second casing 14.

The speaker unit 100 having the constitutions thus far described emits, when the electric signals are applied to the speaker 10, the sound in two routes, that is, the route, along which the sound is emitted from the speaker 10 through the sound hole 12, and the route, along which the mechanical vibrations transmitted from the speaker 10 are transmitted to the first casing 11 so that the sound is emitted through the first casing 11. By the fixing portion 13, the vibration absorbing member 15 and the second casing 14, the mechanical vibrations to be transmitted from the speaker 10 are retained in the stable state so that the relations between the sound to be emitted through the first casing 11 and the sound to be emitted through the sound hole 12 can be improved to emit the sound efficiently.

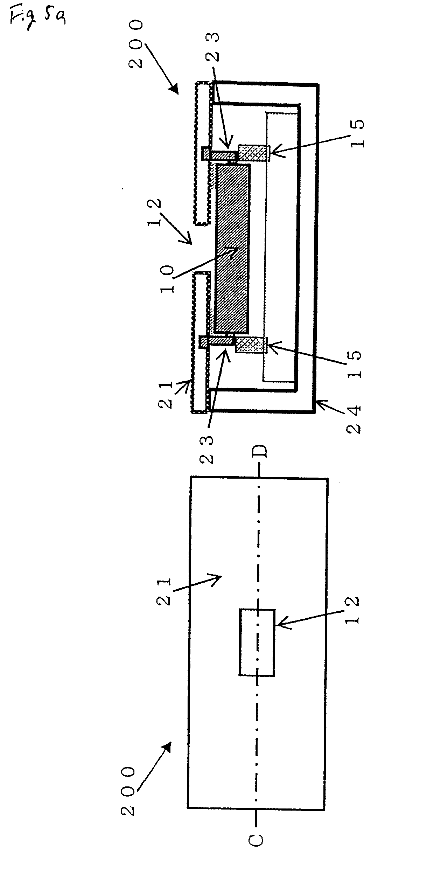

Fig. 4 is a characteristic diagram showing the measured results of output sound pressure - frequency characteristics in the speaker unit 100 of this embodiment. In these measurements: the speaker 10 was exemplified by a piezoelectric speaker having a diameter of 25 mm; the microphone was placed at a position apart by 0.1 m from the speaker unit 100; and the voltage of 3 Vrms was applied to the speaker 10.

In Fig. 4, characteristic I is that of the speaker unit 100 of this embodiment. Characteristic II is that of the speaker unit (as referred to Fig. 11) of the prior art as a reference. In the characteristic I, the output sound pressure level is higher near the minimum resonance frequency (as indicated by zone a in Fig. 4) than that of the characteristic II. This is because the output sound pressure level could be improved by adjusting the rigidity of the fixing portion 13 and the vibration absorption of the vibration absorbing member 15. Moreover, the elastic members 16 and 17 can be so used in place of or together with the vibration absorbing member 15 as to acquire a characteristic equivalent to or better than the characteristic I. In place of or together with at least one of the vibration absorbing member 15 and the elastic members 16 and 17, moreover, the peripheral part 18 can be used to acquire a characteristic equivalent to or better than the characteristic I. At this time, the peripheral part 18 is desired to have a large mass.

Thus, in the speaker unit of the first embodiment, the speaker 10 is clamped and fixed between the first casing 11 and the fixing portion 13, and the arrangement of the speaker 10 is stabilized by the vibration absorbing member 15 interposed between the fixing portion 13 and the second casing 14. On the other hand, the vibration absorbing member 15 absorbs the mechanical vibrations to be generated at the action time of the speaker 10, as described hereinbefore, thereby to perform the function to adjust the vibrations so that the speaker 10, the first casing 11 and the fixing portion 13 may vibrate homogeneously. Therefore, it is possible to efficiently utter the sound from the speaker 10 through the sound hole 12 and the sound through the first casing 11 by the mechanical vibrations transmitted from the speaker 10. As a result, even in the case of mounting the thin type speaker the resonance of which is highly sharpened by thinning the casing to increase the mass of the vibrator accordingly, the speaker can be stably held to keep the characteristics of a satisfactory output sound pressure level with the simple constitution.

### (Second Embodiment)

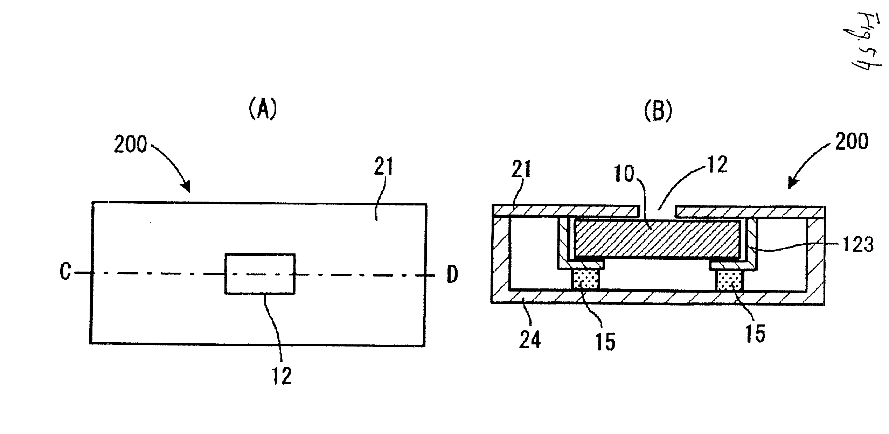

Fig. 5a is a diagram showing the constitution of a first speaker unit according to a second embodiment of the invention. In Fig. 5, (A) is a top plan view showing the exterior of the speaker unit, and (B) is a section taken along line C - D of the speaker unit 200 of (A). This speaker unit 200 is mounted, as in the first embodiment, on the mobile terminal device. Moreover, the same members as those of the first embodiment are designated by the common reference numerals. On the other hand, Fig. 5b is a diagram showing the constitution of a second speaker unit according to the second embodiment of the invention, in which a fixing portion 23 is replaced by a holding member 123.

The speaker unit 200 has a frame including a first casing 21 and a second casing 24. The first casing 21 is jointed to the peripheral edge portion of the second casing 24 by means of an adhesive. At the center of the upper face of the first casing 21, there is formed and opened the rectangular sound hole 12. On the inner face side of the first casing 21, moreover, the frame of the speaker 10 is extended to form a fixing portion 23 for holding the speaker 10. In Fig. 5b, on the other hand, the holding member 123 formed separately of the first casing 21 for holding the speaker 10 is mounted on the inner face side of the first casing 21. The vibration absorbing member 15 is arranged between the fixing portion 23 and the second casing 24. As in the first embodiment, the vibration absorbing member 15 stabilizes the arrangement of the speaker 10, as clamped and fixed between the first casing 21 and the fixing portion 23, and absorbs the mechanical vibrations to be generated at the action time of the speaker 10, thereby to the function to absorb the mechanical vibrations so that the speaker 10, the first casing 21 and the fixing portion 23 may vibrate homogeneously.

In the speaker unit 200 having the constitution thus far described, as in the first embodiment, it is possible to efficiently emit the sound from the speaker 10 through the sound hole 12 and the sound through the first casing 21 by the mechanical vibrations transmitted from the speaker 10. In Fig. 5b, moreover, the assembly is simplified by making the holding member 123 separate of the first casing 21. As a result, even in the case of mounting the thin type speaker the resonance of which is highly sharpened by thinning the casing to increase the mass of the vibrator, the speaker can be stably held to keep the characteristics of a satisfactory output sound pressure level with the simple constitution.

### (Third Embodiment)

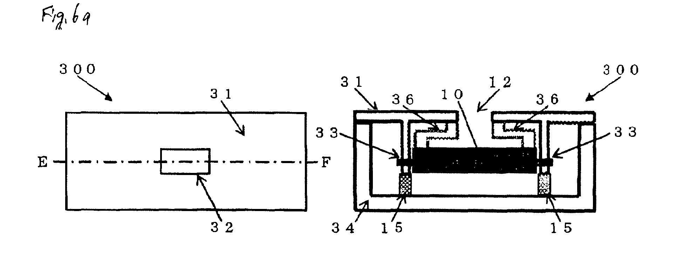

Fig. 6a is a diagram showing the constitution of a first speaker unit according to a third embodiment of the invention. In Fig. 6, (A) is a top plan view showing the exterior of the speaker unit, and (B) is a section taken along line E - F of the speaker unit 300 of (A). This speaker unit 300 is mounted, as in the first embodiment, on the mobile terminal device. Moreover, the same members as those of the first embodiment are designated by the common reference numerals. On the other hand, Fig. 6b is a diagram showing the constitution of a second speaker unit according to the third embodiment of the invention, in which a fixing portion 33 is replaced by a holding member 133.

The speaker unit 300 has a frame including a first casing 31 and a second casing 34. At the center of the upper face of the first casing 31, there is formed the rectangular sound hole 12. On the inner face side of the first casing 31, moreover, there is formed a fixing portion 33 for holding the speaker 10. The vibration absorbing member 15 having functions similar to those of the first and second embodiments is arranged between the fixing portion 33 and the second casing 34. In the space formed between the first casing 31 and the speaker 10, moreover, there are disposed a pair of acoustic tubes 36 for transmitting the sound emitted from the speaker 10.

In the speaker unit 300 having the constitution thus far described, when the electric signals of the voice outputting signals are applied to the speaker 10, the sound from the speaker 10 is emitted through the acoustic tubes 36 and the sound hole 12. By the fixing portion 33, the second casing 34 and the vibration absorbing member 15, moreover, the mechanical vibrations, as transmitted from the speaker 10, are absorbed to retain the stable state so that the speaker 10, the first casing 31 and the fixing portion 33 can be homogeneously vibrated. As a result, the relation between the sound to be emitted from the speaker 10 through the acoustic tubes 36 and the sound hole 12 and the sound to be emitted by the mechanical vibrations through the first casing 31 can be improved to perform the efficient sound generation. Therefore, it is possible to realize a speaker system, which can have characteristics of a satisfactory output voltage pressure level.

### (Fourth Embodiment)

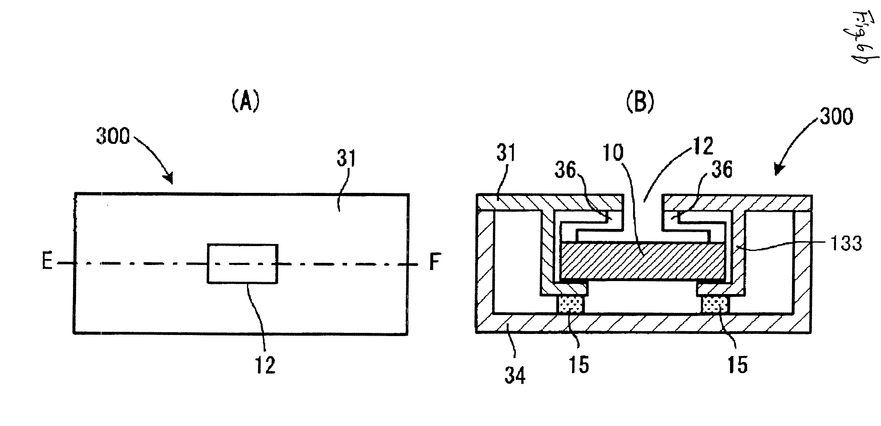

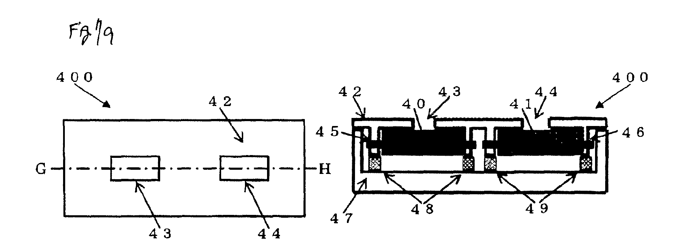

Fig. 7a is a diagram showing the constitution of a first speaker unit according to a fourth embodiment of the invention. In Fig. 7, (A) is a top plan view showing the exterior of the speaker unit, and (B) is a section taken along line G - H of the speaker unit 400 of (A). This speaker unit 400 is mounted, as in the first embodiment, on the mobile terminal device. Moreover, the same members as those of the first embodiment are designated by the common reference numerals. On the other hand, Fig. 7b is a diagram showing the constitution of a second speaker unit according to the fourth embodiment of the invention, in which fixing portions 45 and 46 are replaced by holding members 145 and 146.

The speaker unit 400 has a frame including a first casing 42 and a second casing 47. In the upper face of the first casing 42, there are formed and opened a pair of rectangular sound holes 43 and 44. On the inner face side of the first casing 42, moreover, there are integrally formed fixing portions 45 and 46 for holding a pair of speakers 40 and 41, respectively. Vibration absorbing members 48 and 49 similar to those of the first embodiment are interposed between the fixing portion 45 and the second casing 47 and between the fixing portion 46 and the second casing 47. In short, the frame including the first casing 42 and the second casing 47 is equipped with a plurality of sets of signal output units each having a sound hole, a speaker, a fixing portion and a vibration absorbing member similar to those of the first embodiment. Here, the constitution may also have a plurality of sets of an elastic member of the first embodiment and acoustic tubes of the third embodiment. In this case, the acoustic tubes may transmit the sounds emitted from the speakers, to the individual sound holes, and the acoustic tubes may also be disposed at different positions.

In the speaker unit 400 having the constitution thus far described, when the electric signals of the voice outputting signals are applied to the speaker 40, the sound is emitted from the speaker 40 through the sound hole 12. By the fixing portion 45, the second casing 47 and the vibration absorbing member 48, moreover, the mechanical vibrations, as transmitted from the speaker 40, are absorbed to retain the stable state. Therefore, the relation between the sound to be emitted from the speaker 40 through the sound hole 43 and the sound to be emitted by the mechanical vibrations from the speaker 40 through the first casing 42 can be improved to perform the efficient sound generation. Likewise, the sound is emitted from the speaker 41 through the sound hole 44 when the electric signals of the voice output signals are applied to the speaker 41. By the fixing portion 46, the second casing 47 and the vibration absorbing member 49, moreover, the mechanical vibrations transmitted from the speaker 41 are absorbed to retain the stable state, so that the relation between the sound to be emitted from the speaker 41 through the sound hole 44 and the sound to be emitted by the mechanical vibrations from the speaker 41 through the first casing 42 can be improved to perform the efficient sound generation. As a result, the speaker unit 400 having a plurality of speakers can attain characteristics of a satisfactory output voltage pressure level.

Here, in the first to fourth embodiments, the mobile terminal device is exemplified by the constitution of the mobile telephone having the communicating function. The invention should not be limited thereto but may also be applied to an electronic device such as the PDA (or the mobile information terminal) having the communicating function, the radio pager (or known under the trade name of "pocket bell") or a wrist watch. The invention can also be applied to a setup type electronic device. On the other hand, the fixing portion can be generally constituted in the first to fourth embodiments by a plurality of methods, which can be relatively easily realized by the spot welding, ultrasonic welding or two-color insert molding method. On the other hand, the speaker can also be adhered, in the first to fourth embodiments, directly to the first casing or the holding member by means of an adhesive material such as the double-faced tape.

### (Fifth Embodiment)

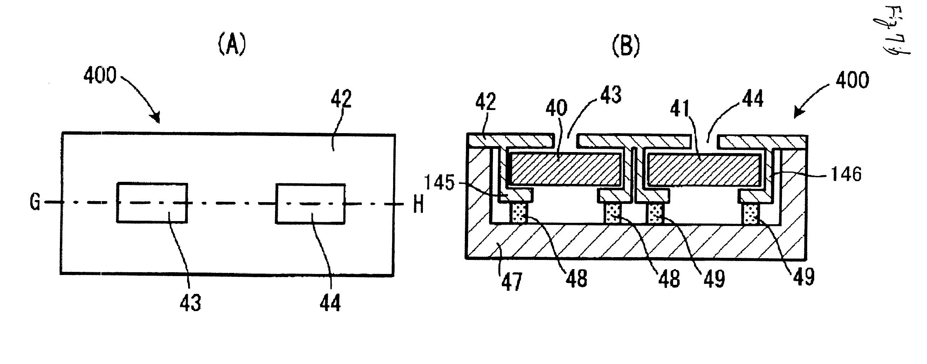

Fig. 8 is a perspective view showing an exterior of a mobile terminal device having a speaker unit mounted thereon according to a fifth embodiment of the invention. This mobile terminal device 600 is exemplified by a PDA having no communicating function, and includes a first casing 60 and a second casing 61, which can be opened/closed by a hinge 62. The first casing 60 has a display unit 64 and the speaker unit 100 arranged therein. An operation menu icon or the like is displayed in the display unit 64.

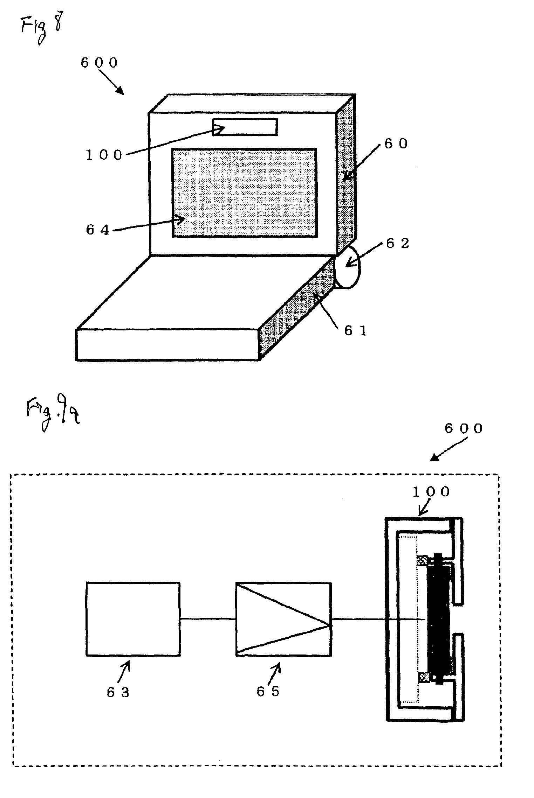

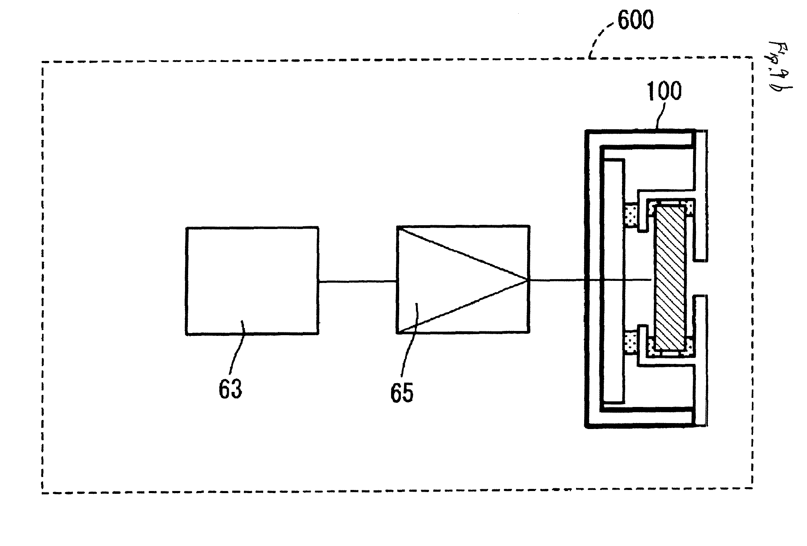

Fig. 9a is a diagram showing a first electric configuration of a voice output unit in the mobile terminal device 600 of the fifth embodiment. The voice output unit is constituted to include a control unit 63 for processing image signals and voice signals, a signal output unit 65 for amplifying the signals from the control unit 63, and the speaker unit 100. Here, the speaker unit 100 of Fig. 9a has a fixing portion. On the other hand, Fig. 9b is a diagram showing a second electric configuration of the voice output unit in the mobile terminal device 600 of the fifth embodiment. The speaker unit 100 has a holding member in place of the fixing portion.

In the mobile terminal device 600 having the constitution thus far described, the signal processing unit 65 amplifies, on the basis of the signals generated in association with the operation of the user and coming from the control unit 63, the electric signals of the voice signals, and outputs the amplified signals to the speaker unit 100. When the electric signals of the voice output signals from the signal processing unit 65 are applied to the speaker unit 100, this speaker unit 100 emits the sound from the sound hole 12, and reproduces and outputs the sound. At this time, the speaker unit 100 functions as a loudspeaker to reproduce the operation sound, the music, the voices or the effective sound. In this case, the speaker unit 100 functions as the loudspeaker.

Although the invention has been described in connection with its embodiments, the invention should not be limited to those embodiments, but various modifications and replacements could be made and applied, if they can achieve the functions defined by the claims or owned by the constitutions of the embodiments.

According to the embodiments thus far described, even in the case of mounting the speaker the resonance of which is highly sharpened by thinning the casing to increase the mass of the vibrator, the speaker can be stably held by providing the vibration absorbing member for absorbing the mechanical vibrations at the action time of the speaker, thereby to keep the characteristics of a satisfactory output sound pressure level with the simple constitution.

Although the invention has been described in detail in connection with the specific embodiments, it is apparent to those skilled in the art that various modifications or corrections could be added without departing from the gist and scope of the invention.

The present application is based on Japanese Patent Application JP 2004-223702 filed in the Japanese Patent Office on July 30, 2004, the entire contents of which being incorporated herein by reference.

### <Industrial Applicability>

The present invention has an effect that the characteristics such as a satisfactory output sound pressure can be retained with a simple constitution, and is useful in a speaker unit to be used in an electronic device such as a mobile terminal device, and in the mobile terminal device and the electronic device.

## Claims

1. A speaker unit comprising:
a first casing having a sound hole formed therein;
a second casing jointed to said first casing for forming a frame together with said first casing;
a speaker arranged in said frame and having a diaphragm for emitting a sound by vibrating said diaphragm in accordance with electric signals applied;
a holding member disposed on the inner face side of said first casing for holding said speaker between itself and said first casing; and
a vibration absorbing member interposed between said holding member and said second casing confronting said holding member, for supporting said holding member and for absorbing the mechanical vibrations generated at the action time of said speaker.

2. The speaker unit as set forth in claim 1,
wherein an elastic member is interposed between said first casing and said speaker.

3. The speaker unit as set forth in claim 1,
wherein an elastic member is interposed between said speaker and said holding member.

4. The speaker unit as set forth in claim 1, further comprising:
a peripheral part disposed on the inner face of said second casing and arranged to abut against said vibration absorbing member.

5. The speaker unit as set forth in claim 1,
wherein said holding member is formed separately of said first casing and attached to said first casing for holding said speaker.

6. The speaker unit as set forth in claim 1,
wherein an acoustic tube is interposed between said first casing and said speaker for transmitting the sound emitted from said speaker to said first casing.

7. The speaker unit as set forth in claim 1,
wherein said frame includes a plurality of sets of signal output units having said sound hole, said speaker, said holding member and said vibration absorbing member.

8. A mobile terminal device comprising:
a speaker unit as set forth in any of claims 1 to 7; and
a signal output unit for outputting electric signals to be fed to said speaker unit.

9. A mobile terminal device as set forth in claim 8, further comprising:
a receiving portion for receiving radio signals,
wherein the electric signals to be fed to said speaker unit are voice signals based on the received signals by said receiving portion.

10. An electronic device comprising:
a speaker unit as set forth in any of claims 1 to 7; and
a signal output unit for outputting the electric signals to be fed to said speaker unit.

11. An electronic device as set forth in claim 10, further comprising:
a control unit for processing voice signals,
wherein the electric signals to be fed to said speaker unit are voice signals generated by said control unit.

12. A speaker unit comprising:
a first casing having a sound hole formed therein;
a second casing jointed to said first casing for forming a frame together with said first casing;
a speaker arranged in said frame and having a diaphragm for emitting a sound by vibrating said diaphragm in accordance with electric signals applied;
a fixing portion projecting from the inner face side of said first casing for fixing said speaker; and
a vibration absorbing member interposed between said fixing portion and said second casing confronting said fixing portion, for supporting said fixing portion and for absorbing the mechanical vibrations generated at the action time of said speaker.

13. A speaker unit comprising:
a first casing having a sound hole formed therein;
a second casing jointed to said first casing for forming a frame together with said first casing;
a speaker arranged in said frame and having a diaphragm for emitting a sound by vibrating said diaphragm in accordance with electric signals applied, said speaker including a fixing portion for fixing said frame to the inner face side of said first casing; and
a vibration absorbing member interposed between said fixing portion and said second casing confronting said fixing portion, for supporting said fixing portion and for absorbing the mechanical vibrations generated at the action time of said speaker.

14. A speaker unit as set forth in claim 12 or 13,
wherein an elastic member is interposed between said first casing and said speaker.

15. A speaker unit as set forth in claim 12 or 13, further comprising:
a peripheral part disposed on the inner face of said second casing and arranged to abut against said vibration absorbing member.

16. A speaker unit as set forth in claim 12 or 13,
wherein an acoustic tube is interposed between said first casing and said speaker for transmitting the sound emitted from said speaker to said first casing.

17. A speaker unit as set forth in claim 12 or 13,
wherein said frame includes a plurality of sets of signal output units having said sound hole, said speaker, said fixing portion and said vibration absorbing member.

18. A mobile terminal device comprising:
a speaker unit as set forth in any of claims 12 to 17; and
a signal output unit for outputting electric signals to be fed to said speaker unit.

19. A mobile terminal device as set forth in claim 18, further comprising:
a receiving portion for receiving radio signals,
wherein the electric signals to be fed to said speaker unit are voice signals based on the received signals by said receiving portion.

20. An electronic device comprising:
a speaker unit as set forth in any of claims 12 to 17; and
a signal output unit for outputting the electric signals to be fed to said speaker unit.

21. An electronic device as set forth in claim 20, further comprising:
a control unit for processing voice signals,
wherein the electric signals to be fed to said speaker unit are voice signals generated by said control unit.
